(19) Europäisches Patentamt
European Patent Office
Office européen des brevets

(11) **EP 2 307 864 B1**

(12) **FASCICULE DE BREVET EUROPEEN**

(45) Date de publication et mention de la délivrance du brevet:
**08.06.2016   Bulletin 2016/23**

(51) Int Cl.:
***G01J 5/20*** *(2006.01)*      ***G01J 5/22*** *(2006.01)*
***G01J 5/24*** *(2006.01)*

(21) Numéro de dépôt: **09784496.3**

(22) Date de dépôt: **09.07.2009**

(86) Numéro de dépôt international:
**PCT/FR2009/051366**

(87) Numéro de publication internationale:
**WO 2010/012931 (04.02.2010 Gazette 2010/05)**

(54) **DISPOSITIF ET PROCÉDÉ DE DÉTECTION D'UN RAYONNEMENT INFRAROUGE AU MOYEN D'UNE MATRICE DE BOLOMÈTRES RÉSISTIFS**

EINRICHTUNG UND VERFAHREN ZUM DETEKTIEREN VON INFRAROTSTRAHLUNG DURCH EINE WIDERSTANDS-BOLOMETERMATRIX

DEVICE AND METHOD FOR DETECTING INFRARED RADIATION THROUGH A RESISTIVE BOLOMETER MATRIX

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **29.07.2008   FR 0855227**

(43) Date de publication de la demande:
**13.04.2011   Bulletin 2011/15**

(73) Titulaire: **ULIS**
**38113 Veurey Voroize (FR)**

(72) Inventeurs:
• **DUPONT, Benoît**
  **B-1180 Bruxelles (BE)**
• **TOUVIGNON, Aurélie**
  **F-38260 La Frette (FR)**
• **VILAIN, Michel**
  **F-38450 Saint Georges De Commiers (FR)**
• **DUPRET, Antoine**
  **F-01400 Orsay (FR)**

(74) Mandataire: **Cabinet Laurent & Charras**
  **Le Contemporain**
  **50 Chemin de la Bruyère**
  **69574 Dardilly Cedex (FR)**

(56) Documents cités:
**US-A1- 2003 146 383      US-A1- 2003 160 171
US-A1- 2006 231 760**

**Description**

**DOMAINE DE L'INVENTION**

La présente invention a trait au domaine de l'imagerie infrarouge et de la pyrométrie bolométrique.
Plus particulièrement, la présente invention concerne le domaine de la correction d'une non-uniformité spatiale de la réponse d'une matrice de détection à bolomètres résistifs.

**ETAT ANTERIEUR DE LA TECHNIQUE**

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs de détection appelés "détecteurs quantiques", qui nécessitent un fonctionnement à très basse température, typiquement celle de l'azote liquide.
Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique dudit matériau.
Un tel détecteur non refroidi associe généralement :

- des moyens d'absorption du rayonnement infrarouge et de conversion de celui-ci en chaleur ;
- des moyens d'isolation thermique du détecteur, de telle sorte à permettre à celui-ci de s'échauffer sous l'action du rayonnement infrarouge ;
- des moyens de thermométrie qui, dans le cadre d'un détecteur bolométrique, mettent en oeuvre un élément résistif ;
- et des moyens de lecture des grandeurs électriques fournis par les moyens de thermométrie.

Les détecteurs destinés à l'imagerie infrarouge sont classiquement réalisés sous la forme d'une matrice de détecteurs bolométriques élémentaires, ou bolomètres, agencée selon une ou deux dimensions, ladite matrice étant suspendue au dessus d'un substrat, généralement réalisé en silicium, via des bras de soutien au niveau de chaque détecteur élémentaire.
Il est usuellement ménagé dans le substrat des moyens d'adressage séquentiel des détecteurs élémentaires et des moyens d'excitation électrique et de pré-traitement des signaux électriques générés par ces détecteurs élémentaires. Ces moyens d'adressage séquentiel, d'excitation électrique et de pré-traitement sont donc formés dans le substrat et constituent un circuit de lecture.
Pour obtenir l'image d'une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.
Un tel détecteur présente de nombreux avantages en termes de coût de fabrication et d'utilisation mais également des inconvénients qui limitent ses performances.
Plus particulièrement, il se pose un problème d'uniformité de la formation du signal par la matrice de bolomètres. En effet, du fait d'une dispersion dans le comportement des bolomètres, qui ne produisent pas tous le même niveau de sortie lorsqu'ils sont portés à une même température de fonctionnement, et qui ne répondent pas tous exactement de la même manière face au même rayonnement infrarouge en provenance de la scène, l'image d'une scène uniforme formée par le détecteur présente un bruit spatial fixe.
Les causes d'une telle dispersion sont nombreuses. On peut citer comme cause principale la dispersion technologique des bolomètres qui se traduit par une dispersion de résistance, impliquant pour les détecteurs une variation de leurs niveaux de sortie, ceci même lorsque la matrice est illuminée par une scène uniforme. Une autre cause de dispersion de signal est la dérive thermique du substrat et de sa distribution spatiale de température, du fait que les bolomètres suivent la température du substrat qui les supporte.
Usuellement, le décalage du niveau de sortie d'un bolomètre particulier par rapport à la moyenne des niveaux de sortie des bolomètres de la matrice lorsque celle-ci est illuminée par une scène uniforme, est désigne sous le terme d' « offset ». L'ensemble des niveaux de sortie dans ces conditions particulières d'illumination uniforme est appelé par la suite « Niveau continu » ou NC par souci de simplification.
Pour compenser la dispersion d'offset des bolomètres, qui est la principale cause de limitation de la qualité des signaux fournis par le détecteur, de nombreuses techniques de correction ont été mises au point.
Un premier type de correction d'offset, par exemple décrit dans le document US 2002/022938, consiste à acquérir une image de référence, à savoir celle d'une scène uniforme. Cette image de référence est alors mémorisée dans le système (ce terme entend l'ensemble des fonctions électro-mécaniques et logicielles qui mettent en oeuvre le détecteur ou capteur), et ensuite soustraite, numériquement ou analogiquement, à chaque image acquise par celui-ci. La formation de l'image de référence est usuellement réalisée au moyen d'un obturateur essentiellement isotherme, que l'on ferme pour obtenir la scène uniforme.

Cette première technique présente l'inconvénient de rendre inopérant le détecteur pendant toute la durée d'acquisition de l'image de référence. En outre, l'installation d'un obturateur présente un surcoût non négligeable et augmente les sources de défaillance mécanique du système ainsi que sa consommation d'énergie.

Le second type de correction de la dispersion des offsets se base sur le fait que l'offset d'un bolomètre résistif dépend de la température de celui-ci. Dans ce second type de correction des bolomètres, par exemple décrit dans le document US 5 811 808, des tables d'offsets pour différentes températures prédéterminées du capteur sont mémorisées de manière permanente dans le système. Celui-ci est équipé d'un capteur thermométrique mesurant la température du substrat, et une unité de traitement d'informations sélectionne alors une des tables d'offset mémorisée en fonction de la température mesurée, ou bien crée une nouvelle table d'offset par interpolation de tables mémorisées en fonction de la température mesurée. La table d'offset sélectionnée ou créée est alors soustraite de l'image courante détectée.

Ce type de correction ne nécessite donc pas d'obturateur mais se révèle cependant moins efficace que le premier type de correction. En outre, la précision de la correction par interpolation est d'autant meilleure que le nombre de points de référence et le degré du polynôme d'interpolation sont élevés. Or, une interpolation de qualité nécessite des quantités importantes de ressources de calcul, et de mémorisation d'un nombre suffisant de tables. De plus, le temps d'acquisition d'une table d'offsets est important. Enfin et surtout, de part son principe, une interpolation n'est valide avec précision qu'au voisinage des points de référence. Ainsi, le coût de fabrication d'un détecteur mettant en oeuvre la seconde technique devient prohibitif dès lors que l'on souhaite un échantillonnage précis du domaine de températures de fonctionnement du détecteur.

Les documents US2003160171 et US2003146383 divulguent une correction de offset à partir de tables et de valeurs combinées avec des polynômes d'interpolation.

Le but de la présente invention est de résoudre les problèmes susmentionnés, en proposant une technique de correction efficace et précise, qui ne nécessite pas d'obturateur, tout en utilisant une quantité limitée de tables.

## EXPOSE DE L'INVENTION

A cet effet, l'invention a pour objet un dispositif de détection d'un rayonnement infrarouge, selon la revendication 1.

Selon l'invention, les moyens de correction sont aptes à corriger le signal formé à partir du bolomètre, à l'aide d'un modèle physique prédéterminé du comportement en température dudit signal, et notamment à l'aide d'un modèle physique prédéterminé du comportement en température du bolomètre.

Avantageusement, ledit modèle est formulé de manière compacte, c'est-à-dire adapté à un calcul rapide sans résolution numérique d'équations différentielles.

La température du bolomètre résistif, et par conséquent sa résistance électrique, dépendent de la température de la scène observée dont la puissance infrarouge est projetée sur la matrice de bolomètre via l'optique et est captée par chaque bolomètre, mais surtout de la température plan focal. Les bolomètres étant des éléments de détection thermique, ils sont suspendus au dessus du substrat contenant le circuit de lecture par des bras d'isolation thermique. Par conduction thermique, la température plan focal influe directement sur la température du bolomètre. On peut admettre comme ordre d'idée que la contribution du plan focal à la température du bolomètre est d'environ 99% contre environ 1% pour la température de scène. Le comportement du niveau de sortie du bolomètre, quelle que soit la température de scène, dépend donc principalement de la température plan focal. La température plan focal fixe donc le point de fonctionnement en température des bolomètres. Les dispersions de résistance des bolomètres varient aussi en fonction de la température du plan focal. L'évolution de la résistance d'un bolomètre particulier peut être estimée en fonction de la température plan focal, et par conséquent aussi l'évolution de la dispersion (puisque chacun peut être connu). Une modélisation fidèle du comportement en température du signal formé à partir du bolomètre, et notamment une modélisation du comportement en température du bolomètre, permet donc d'assurer la validité au cours du temps de la correction lors des changements de température plan focal.

Le terme « comportement » du signal d'un bolomètre définit ici la correspondance répétable entre la température plan focal, qui constitue le point de repos thermique de fonctionnement du bolomètre, et le résultat du processus de formation du signal, lequel dépend des divers paramètres physiques des éléments impliqués dans l'élaboration dudit signal. Parmi ces paramètres figure principalement la résistance électrique du bolomètre formé sur ce substrat, pour des conditions d'éclairement IR données, à toute température plan focal mais d'autres paramètres peuvent également intervenir, comme par exemple la résistance électrique d'une structure de compensation.

En effet, il est très généralement mis en oeuvre lors de la formation du signal, une structure dite de compensation, destinée à produire un courant dit de mode commun, représentatif de la partie du courant du bolomètre d'imagerie indépendante de la scène. Ce courant est soustrait du courant du bolomètre d'imagerie avant formation du signal, comme il sera expliqué plus en détail ultérieurement. Cette structure est typiquement elle-même bolométrique, et formée avec le même matériau que la structure sensible d'imagerie. Ainsi, le courant utilisé pour former le signal est déjà en grande partie compensé des variations induites par les fluctuations de température plan focal, et essentiellement représentatif de la scène thermique. Les considérations précédentes sur l'effet de la température plan focal sur le signal et ses dispersions restent malgré tout très largement applicables.

Cette correspondance entre la température plan focal et le signal formé est établie de préférence à l'aide d'un « modèle physique », exprimant la loi de comportement du signal formé en fonction de la température plan focal dans ces conditions optiques de référence.

On notera qu'un modèle physique désigne ici une ou plusieurs relations mathématiques, comme une fonction ou un système d'équations différentielles par exemple, dont les sorties sont calculables quelle que soit la valeur de ses entrées à partir d'un seul jeu de paramètres comportementaux identifiés. Préférentiellement, l'invention vise une modélisation du signal selon une forme analytique « compacte » qui autorise un calcul direct et rapide exempt de boucles de résolution élaborées.

En d'autres termes, un modèle physique du comportement en température du signal formé à partir d'un bolomètre permet de déterminer l'offset du signal en fonction de la température plan focal mesurée, sans qu'il soit besoin d'utiliser un obturateur ou une interpolation d'une pluralité de tables.

De plus, les modèles physiques utilisent un nombre limité de paramètres de sorte que l'identification des paramètres est moins coûteuse que l'identification de la pluralité de tables de l'état de la technique.

Selon l'invention, les moyens de mesure de la température comportent au moins une sonde de mesure de la température du substrat.

Selon un mode de réalisation particulier de l'invention, les moyens de mesure de la température comprennent une pluralité de sondes de mesure de température aptes à mesurer la température du substrat en une pluralité de points de celui-ci et des moyens de modélisation de la distribution spatiale de la température du substrat en fonction de la température mesurée en la pluralité de points du substrat, et en ce que les moyens de correction sont aptes à corriger le signal formé à partir du bolomètre en fonction de la température modélisée du substrat au voisinage de celui-ci.

En d'autres termes, le substrat peut présenter une non-uniformité spatiale de sa température. A l'aide d'une modélisation de la distribution spatiale de la température du substrat, il est possible de déterminer la température de celui-ci en dessous de chaque bolomètre et donc d'accroître la précision de la correction.

Avantageusement, les moyens de correction sont aptes à estimer le niveau continu (NC) correspondant à l'exposition de la matrice à une scène uniforme de température sensiblement égale à la température plan focal mesurée.

Lesdits moyens de correction sont aptes d'une part à estimer la résistance du bolomètre selon la relation :

$$R_{est}(i,j) = R_{abs}(i,j).C(T_{mes})$$

où:

- $R_{est}(i,j)$ est la résistance du bolomètre estimée,
- $R_{abs}(i,j)$ est une résistance de référence prédéterminée du bolomètre,
- $C(T_{mes})$ est un paramètre dépendant de la température plan focal mesurée $T_{mes}$ exprimée en degrés Kelvin.

De préférence, le paramètre $C(T_{mes})$ est calculé selon la relation :

$$C(T_{mes}) = \exp\left(\frac{E_A}{k.T_{mes}}\right)$$

où :

- $E_A$ est une énergie d'activation de la conductivité prédéterminée du bolomètre,
- $k$ est la constante de Bolzmann,

Selon un mode de réalisation particulière de l'invention, le dispositif comporte une structure de compensation de mode commun comprenant un bolomètre de compensation associé à chaque colonne de la matrice, les moyens de

4

lecture étant aptes à former le signal à partir d'une différence entre un courant circulant dans le bolomètre d'imagerie et un courant circulant dans le bolomètre de compensation associé à celui-ci, et les moyens de correction sont aptes à estimer une résistance dudit bolomètre de compensation, correspondant à l'exposition de la matrice à une scène uniforme de température sensiblement égale à la température mesurée, pour corriger le signal.

Notamment, les moyens de correction sont aptes à estimer la résistance du bolomètre de compensation selon la relation :

$$R_{comp-est}(j) = R_{comp-abs}(j).C(T_{mes})$$

où $R_{comp-est}(j)$ est la résistance du bolomètre de compensation estimée, $R_{comp-abs}(j)$ est une résistance de référence prédéterminée du bolomètre de compensation, et $C(T_{mes})$ est un paramètre dépendant de la température mesurée $T_{mes}$ du substrat. Plus particulièrement, le paramètre $C(T_{mes})$ est calculé selon la relation :

$$C(T_{mes}) = \exp\left(\frac{E_A}{k.T_{mes}}\right)$$

où $E_A$ est une énergie d'activation prédéterminée du bolomètre d'imagerie, $k$ est la constante de Bolzmann, et $T_{mes}$ est la température mesurée exprimée en degrés Kelvin.

Selon un mode de réalisation particulier de l'invention, les moyens de correction sont aptes :

- à estimer un niveau continu du signal formé à partir du bolomètre d'imagerie, correspondant à l'exposition de la matrice à une scène uniforme de température sensiblement égale à la température mesurée, selon la relation :

$$NC(i,j) = \alpha - \beta \times \left(I_{comp}(j) - I_{ac}(i,j)\right)$$

où $\alpha$ et $\beta$ sont des paramètres prédéterminés dépendant du circuit de lecture, $I_{comp}(j)$ est le courant circulant dans le bolomètre de compensation calculé à partir de la résistance estimée de celui-ci, et $I_{ac}(i,j)$ est le courant circulant dans le bolomètre d'imagerie calculé à partir de la résistance estimée de celui-ci ; et
- à corriger le signal $N_{brut}(i,j)$ formé à partir du bolomètre d'imagerie selon la relation :

$$N_{corr}(i,j) = N_{brut}(i,j) - NC(i,j) + \overline{NC}$$

où $N_{corr}(i,j)$ est la signal de sortie corrigée et $\overline{NC}$ est la valeur moyenne des niveaux continus estimés.

Les moyens de correction sont d'autre part aptes à estimer le niveau de signal continu NC à partir de cette estimation de résistance et de la configuration du circuit en charge d'établir le signal. En particulier, les moyens de correction sont aptes à estimer la résistance des structures de compensation de mode commun selon une formulation directement inspirée des relations précédentes, où en particulier typiquement la même énergie d'activation de conductivité sera utilisée. Le signal modélisé est établi par l'expression de la différence des courants issus du bolomètre d'imagerie et du bolomètre de compensation, comme il sera discuté plus loin.

Ainsi, les moyens de correction sont aptes à corriger des niveaux de sortie, des dispersions en comportements en température des bolomètres de la matrice.

Avantageusement, les moyens de correction sont réalisés au moins partiellement dans ledit substrat.

Avantageusement, les résistances de référence des bolomètres de la matrice peuvent être tabulées dans une mémoire permanente intégrée au substrat.

Selon une variante de l'invention, les moyens de correction sont réalisés sous la forme d'un circuit électronique intégré au substrat.

## BREVE DESCRIPTION DES FIGURES

L'invention sera mieux comprise à la lecture de la description qui va suivre, donnée uniquement à titre d'exemple et réalisée en relation avec les dessins annexés, dans lesquels des références identiques désignent des éléments identiques ou analogues, et dans lesquels :

- la figure 1 est une vue schématique d'un dispositif de détection bolométrique selon l'invention ;
- la figure 2 est une vue schématique d'un agencement d'un bolomètre d'imagerie, d'un circuit de compensation et d'un circuit de mesure entrant dans la constitution du dispositif de la figure 1 ;
- la figure 3 est un organigramme du fonctionnement du système de la figure 1 selon un premier mode de réalisation ; et
- la figure 4 est un organigramme du fonctionnement du système de la figure 1 selon un second mode de réalisation.

## MODE DE REALISATION DE L'INVENTION

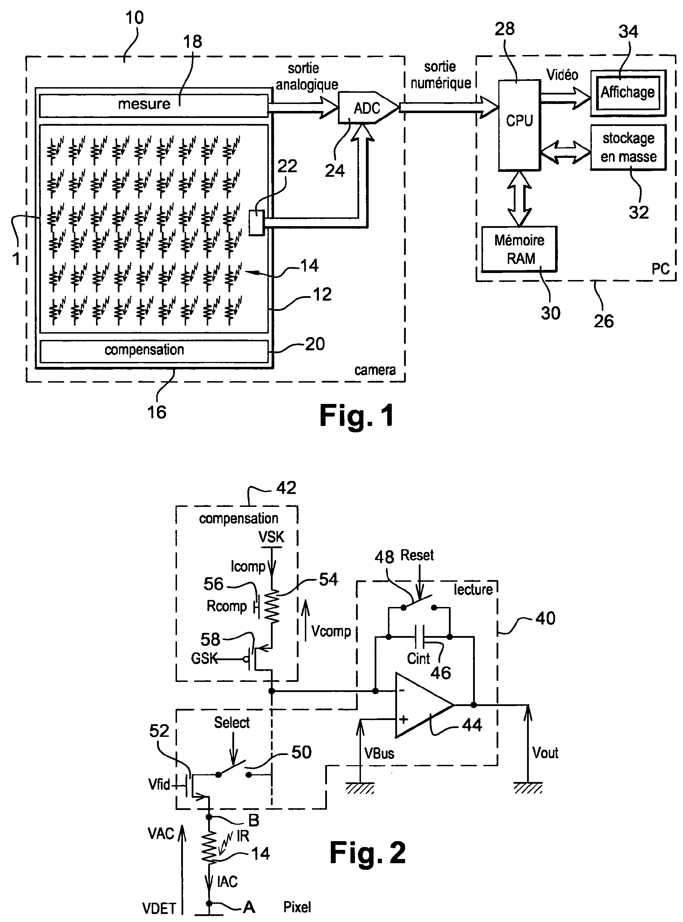

On a illustré schématiquement sur la figure 1 sous la référence générale **10,** un détecteur bolométrique d'acquisition d'une scène dans le rayonnement infrarouge thermique, ce détecteur étant incorporé dans le plan focal d'une optique d'une caméra infrarouge. Un tel détecteur comporte :

- une matrice bidimensionnelle **12** d'imagerie comprenant $\underline{n}$ lignes et $\underline{m}$ colonnes de bolomètres résistifs d'imagerie **14** à membrane suspendue, où $\underline{n}$ et $\underline{m}$ sont des entiers supérieurs ou égaux à 1. La matrice d'imagerie **12** est agencée dans le plan focal d'une optique transparente aux infrarouges de la caméra et suspendue au-dessus d'un substrat réfléchissant ;
- un circuit de lecture **16** formé dans le substrat. Le circuit de lecture **16** comprend un circuit d'adressage ligne par ligne de la matrice d'imagerie **12** et, pour chaque colonne de celle-ci, un circuit de mesure apte à être connecté à chaque bolomètre d'imagerie **14** de la colonne adressée ; ces circuits de mesure sont représentés collectivement par le bloc **18,** qui comprend en outre des moyens de multiplexage des signaux vers la ou les sortie(s) analogique(s) ;
- le circuit de lecture **16** comporte en outre une ligne **20** de circuits de compensation comprenant un ou plusieurs bolomètres de compensation en relation avec chaque colonne de la matrice d'imagerie **12 ;**
- au moins une sonde de température **22** formée dans le substrat et mesurant une température de celui-ci ; et
- un circuit de conversion **24** connecté au circuit de lecture **16** et à la sonde de température **22** pour convertir des signaux analogiques délivrés par ceux-ci en des signaux numériques.

Une telle structure de détecteurs bolométriques est classique et ne sera pas expliquée plus en détail par la suite. Pour de plus amples informations, on pourra utilement se reporter au document « Uncooled amorphous silicon enhancement for $25\mu$m pixel pitch achievement » de E. Mottin et al, Infrared Technology and Application XXVIII, SPIE, vol. 4820.

Le détecteur bolométrique **10** est par ailleurs connecté à une unité de traitement d'informations **26,** mettant en oeuvre un algorithme de traitement des signaux délivrés par celui-ci pour déterminer une image infrarouge de la scène projetée sur la matrice **12,** ainsi qu'une compensation d'une dispersion des comportements des bolomètres d'imagerie **14,** comme cela sera expliqué plus en détail par la suite.

L'unité de traitement d'informations **26** est par exemple mise en oeuvre dans un ordinateur personnel comportant, de manière connue, une unité centrale de traitement, ou unité CPU **28,** associée à une mémoire vive **30,** et à une mémoire de masse **32,** tel un disque dur par exemple. L'unité **26** est par ailleurs connectée à un écran d'affichage **34** pour la visualisation des images infrarouges capturées par la caméra. Bien entendu des formes de réalisation matérielle beaucoup plus intégrées, basées sur des circuits adaptés communiquant entre eux comme il est connu dans la technique du domaine, peuvent être mises en oeuvre exactement de la même manière.

Sur la figure 2, on a illustré un agencement élémentaire préféré:

- d'un bolomètre d'imagerie **14** de la matrice **12 ;**
- d'un circuit de mesure **40** du circuit de lecture **16** pour la mesure du bolomètre d'imagerie **14 ;** et
- d'un circuit de compensation **42** de la ligne **20** pour la compensation d'un courant de mode commun circulant dans le bolomètre d'imagerie **14** lors de la lecture de celui-ci.

Le bolomètre **14** est soumis à un rayonnement infrarouge **IR** issu d'une scène et est connecté à une tension constante *VDET* par une première borne **A.**

Le circuit de mesure **40** comprend :

- un amplificateur opérationnel **44** dont une borne non-inverseuse (+) est mise à une tension constante *VBUS* prédéterminée ;
- un condensateur 46, de capacité $C_{int}$ prédéterminée, connecté entre une borne inverseuse (-) de l'amplificateur **44** et une sortie de celui-ci ;

- un interrupteur de remise à zéro **48** connecté en parallèle au condensateur **46** et pilotable au moyen d'un signal « Reset » ;
- un interrupteur de lecture **50,** pilotable au moyen d'un signal Select, et connecté à la borne inverseuse (-) de l'amplificateur opérationnel ; et
- un premier transistor MOS **52** d'injection, dont la grille est mise à une tension *GFID* constante prédéterminée, dont la source est connectée à une seconde borne **B** du bolomètre **14,** et dont le drain est connecté à l'autre borne de l'interrupteur **50** de lecture.

Le circuit de compensation **42** du courant de mode commun traversant le bolomètre d'imagerie **14** comprend un bolomètre résistif de compensation **54** réalisé dans le même matériau que le bolomètre d'imagerie **14,** présentant une faible résistance thermique vers le substrat et pourvu, de manière optionnelle, d'un écran **56** contre le rayonnement issu de la scène.

On notera que la résistance du bolomètre de compensation **54** varie de manière négligeable par rapport à celle du bolomètre d'imagerie **14,** lorsqu'il est soumis à un flux infrarouge incident, car le bolomètre de compensation **54** est insensible au rayonnement infrarouge issu de la scène. Il peut être ainsi considéré que la résistance du bolomètre de compensation est sensiblement constante à la température du plan focal donnée.

Le bolomètre de compensation **56** est connecté à l'une de ses bornes à une tension prédéterminée *VSK* et à l'autre de ses bornes à la source d'un second transistor MOS d'injection **58** du circuit de compensation **42.** Le drain du transistor **58** est connecté à l'entrée inverseuse de l'amplificateur opérationnel **44** et la grille est connectée à une tension prédéterminée *GSK*.

Au début d'un cycle de lecture du bolomètre **14,** l'interrupteur de remise à zéro **48,** qui est dans un état fermé suite à un cycle de décharge du condensateur **46,** est basculé dans un état ouvert par réglage du signal « Reset » à une valeur appropriée. L'interrupteur de lecture **50,** qui est dans un état ouvert, est basculé dans un état fermé par réglage de la commande « Select ». Le circuit électronique réalise une opération d'intégration de la différence entre le courant $I_{ac} = V_{ac}/R_{ac}$ traversant le bolomètre **14** et le courant $I_{comp} = V_{comp}/R_{comp}$ traversant le bolomètre de compensation **54,** dont le résultat s'exprime sous forme de tension aux bornes du condensateur **46.** Les tensions $V_{ac}$ et $V_{comp}$ vues respectivement aux bornes des bolomètres actifs et de compensation résultent des diverses tensions d'alimentation et de commande des transistors **52** et **58,** de telle manière à définir un point de fonctionnement adéquat pour le bolomètre actif d'une part, et une compensation efficace de mode commun du bolomètre de compensation d'autre part, il n'est pas besoin d'exprimer plus avant les relations de détail que l'homme du métier sait définir d'après le schéma de la Figure 2. Lorsqu'une durée d'intégration $\Delta T_{\text{int}}$ prédéterminée s'est écoulée depuis le début du cycle de lecture, l'interrupteur de lecture **50** est basculé dans son état ouvert.

La tension ou niveau en sortie de l'amplificateur **44,** qu'on appellera $N_{brut}$, qui contient le signal provenant du bolomètre d'imagerie **14** de résistance $R_{ac}$, s'exprime, en admettant pour simplifier, que $R_{ac}$ varie peu pendant la durée d'intégration $\Delta T_{\text{int}}$, selon la relation :

$$N_{brut} = VBUS - \frac{\Delta T_{\text{int}}}{C_{\text{int}}} \times \left( \frac{V_{comp}}{R_{comp}} - \frac{V_{ac}}{R_{ac}} \right) \quad (1)$$

où :

- $V_{ac}$ est la tension aux bornes du bolomètre d'imagerie **14** ;
- $R_{ac}$ est la résistance du bolomètre d'imagerie **14** ;
- $V_{comp}$ est la tension aux bornes du bolomètre de compensation **54** ; et
- $R_{comp}$ est la résistance du bolomètre de compensation **54.**

Le circuit de conversion **24,** qui est connecté à l'amplificateur **44,** convertit la tension analogique $N_{brut}$ en une valeur numérique. Le circuit **24** délivre cette valeur numérique à l'unité de traitement d'informations **26** qui détermine en fonction de celle-ci une valeur de pixel d'image correspondante, comme cela est bien connu.

L'agencement et le fonctionnement des éléments venant d'être décrits sont classiques et ne seront donc pas expliqués plus en détail pour des raisons de concision. Pour de plus amples détails, on pourra par exemple se référer aux documents suivants :

- « Uncooled amorphous silicon enhancement for 25μm pixel pitch achievement » de E. Mottin et al, Infrared Technology and Application XXVIII, SPIE, vol. 4820;
- « 320 x 240 uncooled microbolometer 2D array for radiometric and process control applications » de B. Fieque et al., Optical System Design Conference, SPIE, vol. 5251; et

- « Low cost amorphous silicon based 160 x 120 uncooled microbolometer 2D array for high volume applications » de C Trouilleau et al., Optical System Design Conference, SPIE, vol. 5251.

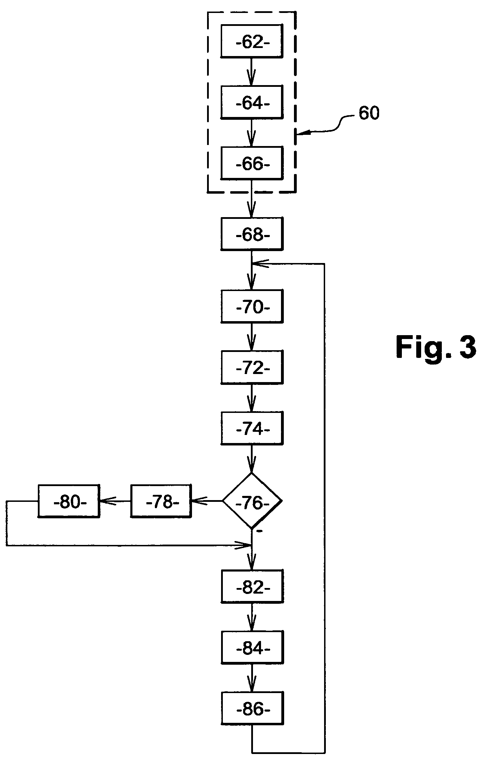

Il va maintenant être décrit, en relation avec l'organigramme de la figure 3, un procédé de compensation des offsets des bolomètres d'imagerie **14** de la matrice **12,** mis en oeuvre à l'aide du dispositif venant d'être décrit.

Dans une première phase d'initialisation **60,** mise en oeuvre avant la première utilisation du détecteur selon l'invention, par exemple en usine, une résistance de référence est déterminée pour chacun des bolomètres d'imagerie **14** de la matrice **12.**

Cette phase d'initialisation **60** comprend une étape **62** pendant laquelle le détecteur **10** est exposé à une scène uniforme de température constante, tout en s'assurant que la température du plan focal du détecteur, et donc des bolomètres d'imagerie **14** et du substrat, soit sensiblement égale à la température de la scène. Parallèlement, la température du substrat est mesurée par la sonde de température **22** et la mesure délivrée après conversion numérique à l'unité de traitement d'informations **26,** est conservée sous le paramètre $T_{ref}$.

Dans une étape **64** suivante, un cycle de lecture particulier de la matrice est mis en oeuvre, dans lequel la compensation du courant de mode commun mise en oeuvre par les circuits de compensation **42** est désactivée.

Pour un bolomètre d'imagerie **14** particulier, seul le courant traversant celui-ci est donc intégré par le circuit de mesure **40** associé. A la fin de la lecture de ce bolomètre, la tension $V_{out}$ en sortie de l'amplificateur **44** s'exprime donc selon la relation :

$$V_{out} = VBUS + \frac{\Delta T_{\text{int}}}{C_{\text{int}}} \times \frac{V_{ac}}{R_{ac}} \qquad (2)$$

Dans le cas particulier de l'étape **64,** la tension $V_{FID}$ est usuellement portée à VDD. La résistance série du transistor 52 est négligeable et on peut admettre l'expression simplifiée :

$$V_{ac} \cong VBUS - VDET$$

De préférence, les tensions $VBUS$ et $VDET$ sont choisies proches l'une de l'autre pour éviter qu'un courant trop important ne traverse le bolomètre d'imagerie et provoque un échauffement préjudiciable de celui-ci par effet joule.

On notera que pour la mise en oeuvre de l'étape de lecture **64,** une durée d'intégration $\Delta T_{\text{int}}$ plus courte et/ou une capacité $C_{\text{int}}$ plus importante, qui devra dans ce cas être prévue dans le circuit de lecture, peuvent être choisies pour éviter une saturation du condensateur **46** ou de l'amplificateur **44.**

Une fois la lecture de la matrice **12** terminée, une résistance de référence $R_{abs}$ est calculée, lors d'une étape suivante **66,** pour chaque bolomètre d'imagerie **14** par l'unité de traitement d'informations **26** à partir d'un modèle physique du comportement en température de sa résistance.

Plus particulièrement, en **66,** l'unité de traitement d'informations **26** calcule la résistance de référence selon les relations :

$$R_{abs}(i,j) = R_{ac}(i,j).exp\left(-\frac{E_A}{k.T_{ref}}\right) \qquad (3)$$

$$R_{ac}(i,j) = \frac{VBUS - VDET}{(V_{out}(i,j) - VBUS)} \times \frac{\Delta T_{int}}{C_{int}} \qquad (4)$$

où :

- exp est la fonction exponentielle,
- $E_A$ est une énergie prédéterminée d'activation du bolomètre,

- $k$ est la constance de Bolzmann,
- et $T_{ref}$ est la température du substrat mesurée lors de l'étape **60**.

Une fois l'étape d'initialisation **60** terminée, il est ainsi obtenu une table bidimensionnelle $R_{abs}$ de résistances de référence pour les bolomètres d'imagerie de la matrice **12**. Cette table est alors mémorisée dans la mémoire de masse **32** de l'unité de traitement d'informations **26**.

Une fois le détecteur sorti d'usine et mis en service par un utilisateur, le procédé se poursuit pour la correction en temps réel des offsets de la matrice d'imagerie **12**.

Lors d'une mise sous tension du système, la table de résistances de référence est chargée, en **68**, dans la mémoire vive **30** de l'unité de traitement d'informations **26**. Toujours en **68**, deux tables bidimensionnelles de dimensions correspondant à celles de la matrice d'imagerie **12**, à savoir une table $R_{est}$ de résistances estimées et une table $NC$ de niveaux de sortie, sont initialisées à zéro et mémorisées dans la mémoire vive **30**.

Dans une étape **70** suivante, la matrice **12** est exposée à une scène à observer. Ensuite, ou parallèlement à l'étape **70**, une mesure de la température du substrat est réalisée en **72** à l'aide de la sonde **22** et la valeur de température est mémorisées en tant que paramètre $T_{mes}$.

Le procédé se poursuit alors par une étape **74** de lecture classique (avec ébasage i.e. compensation de mode commun) des bolomètres d'imagerie **14** de la matrice **12**, comme cela a été décrit précédemment. Les différentes tensions (ou niveaux de sortie) $N_{brut}$ mesurées associées à ces bolomètres sont numérisées et mémorisées dans la mémoire vive **30**.

Un test est alors mis en oeuvre en **76** par l'unité **26** pour déterminer si la valeur absolue de la différence entre les valeurs $T_{ref}$ et $T_{mes}$ est supérieure à une valeur de seuil prédéterminée, par exemple égale à 0,2 degré Kelvin.

Si le résultat de ce test est positif, une résistance estimée $R_{est}(i,j)$ est calculée en **78** pour chaque bolomètre de la matrice **12** par l'unité **26**. Cette résistance estimée du bolomètre est calculée en fonction de la résistance de référence $R_{abs}(i,j)$ correspondante de la table $R_{abs}$, selon la relation :

$$R_{est}(i,j) = R_{abs}(i,j).\exp\left(\frac{E_A}{k.T_{mes}}\right) \qquad (5)$$

La valeur $R_{est}(i,j)$ remplace alors la valeur correspondante de la table $R_{est}$.

Une fois l'étape **78** terminée, une résistance estimée a donc été calculée pour chaque bolomètre de la matrice d'imagerie **12** et mémorisée dans la table $R_{est}$.

Le procédé se poursuit alors par une étape **80** de calcul, pour chaque bolomètre d'imagerie de la table **12**, d'un niveau de sortie devant la scène uniforme $NC(i,j)$ par l'unité **26** selon les relations :

$$NC(i,j) = VBUS - \frac{\Delta T_{int}}{C_{int}}\left(I_{comp} - I_{ac}(i,j)\right) \qquad (6)$$

L'homme du métier sait exprimer $I_{comp}$ lorsque le MOS **58** est en régime saturé, à partir des paramètres technologiques et de la configuration du circuit, selon la relation :

$$I_{comp} = \frac{-\left(1 + 2.R_{comp}.A_p\left(VSK - GSK - V_{thp}\right)\right) - \sqrt{1 + 4.R_{comp}.A_p\left(VSK - GSK - V_{thp}\right)}}{-2.A_p.R_{comp}^2} \qquad (7)$$

D'autre part $I_{ac}$ s'exprime, lorsque le MOS 52 est en régime saturé, par la relation :

$$I_{ac}(i,j) = \frac{-\left(1 + 2.R_{est}(i,j).A_n\left(GFID - V_{thn}\right)\right) - \sqrt{1 + 4.R_{est}(i,j).A_n\left(GFID - V_{thn}\right)}}{-2.A_n.R_{est}^2(i,j)} \qquad (8)$$

où

- $Ap$ et $An$ sont des facteurs technologiques connus des MOS **58** et **52** respectivement ;

■ $V_{thp}$ et $V_{thn}$ sont les tensions de seuil connues des MOS **58** et **52** respectivement ; et

■ *VFID* et *GSK* étant les tensions appliquées sur les grilles des transistors **52** et **58** respectivement, connues également.

Les niveaux continus *NC(i,,j)* nouvellement calculés remplacent alors les valeurs de la table *NC* correspondant aux bolomètres d'imagerie. Une fois l'étape **80** terminée, un niveau de scène uniforme, dit continu, a donc été calculé pour chaque bolomètre de la matrice d'imagerie **12** et mémorisé dans la table *NC.*

L'étape **80** est suivie d'une étape **82** de correction par l'unité **26** de la tension de sortie numérisée $N_{brut}(i,j)$ de chaque bolomètre d'imagerie selon la relation :

$$N_{corr}(i, j) = N_{brut}(i, j) - NC(i, j) + \overline{NC} \qquad (9)$$

où $N_{corr}(i,j)$ est la tension de sortie numérisée corrigée et $\overline{NC}$ est la valeur moyenne des tensions de sortie devant une scène uniforme calculées lors de l'étape **80.**

Si le test mis en oeuvre lors de l'étape **76** est négatif, c'est-à-dire si la température du substrat n'a pas varié de manière significative entre deux cycles de lecture de la matrice d'imagerie **12,** l'étape **76** boucle sur l'étape de correction **82.** La correction de niveau continu est alors réalisée sur la base d'une matrice *NC* de niveaux continus calculée lors d'un cycle précédent.

L'étape **82** se poursuit alors par l'affichage, ou plus généralement l'exploitation, en **84,** de l'image corrigée de la scène capturée par la matrice **12,** puis en **86** du réglage de la valeur de température $T_{ref}$ à la valeur $T_{mes}$. L'étape **86** boucle alors sur l'étape **70** d'exposition pour l'accomplissement d'un nouveau cycle de lecture.

Dans le mode de réalisation venant d'être décrit, seul les bolomètres d'imagerie **14** sont pris en compte en tant que source de dispersion des offsets des signaux de sortie. Ainsi, comme on peut le constater à la lecture de la relation (6), les niveaux continus *NC(i,j)* dépendent de plusieurs grandeurs dont notamment le courant $I_{ac}(i,j)$ traversant les bolomètres d'imagerie **14.** Dans la mesure où la principale source de dispersion provient du comportement non uniforme des bolomètres d'imagerie, les niveaux continus *NC(i,j)* sont donc calculés en fonction des courants $I_{ac}(i,j)$.

Toutefois, comme on peut le noter à la lecture de la relation (6), les niveaux continus *NC(i,j)* dépendent également d'autres grandeurs, et notamment le courant $I_{comp}$ traversant les bolomètres de compensation **54.** Dans le premier mode de réalisation décrit ci-dessus, il est considéré que ce courant est identique pour chacun des bolomètres de compensation **54,** ce qui signifie que ceux-ci présentent un comportement en température uniforme, ou à tout le moins des dispersions négligeables au regard des dispersions des bolomètres d'imagerie **14.**

Or, tel n'est pas nécessairement le cas. Tout comme les bolomètres d'imagerie **14,** les bolomètres de compensation **54** répondent différemment lorsqu'ils sont soumis à des conditions environnementales identiques, induisant ainsi une dispersion dans les courants $I_{comp}$ les traversant, et de fait une dispersion dans les niveaux continus *NC(i,j).*

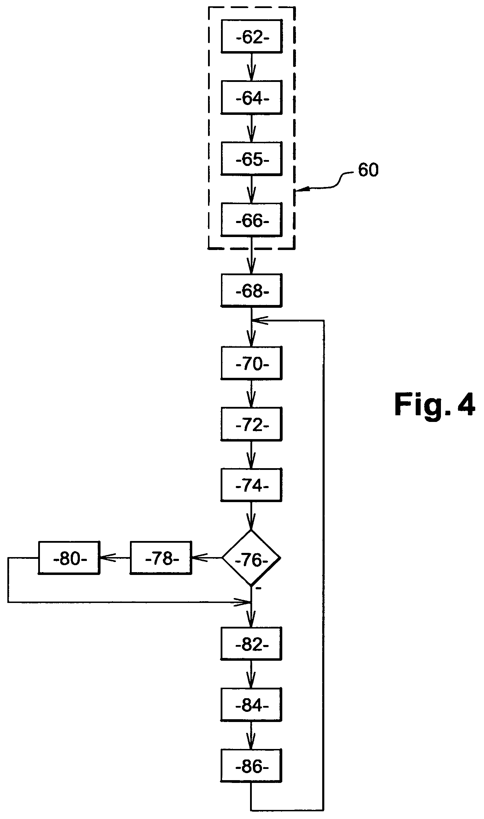

Il est à présent être décrit en relation avec la figure 4 un mode de réalisation corrigeant la dispersion d'offset dans les signaux de sortie du détecteur qui prend également en compte les bolomètres de compensation **54** comme source d'une telle dispersion. La structure du détecteur reste inchangée, seul le procédé de compensation des offsets étant modifié.

Le procédé de compensation des offsets selon le second mode de réalisation comporte des étapes **62** et **64** identiques à celles décrites précédemment.

Dans une étape **65** suivante, un second cycle de lecture particulier est mis en oeuvre, dans lequel le courant issu des bolomètres actifs est désactivé en laissant ouvert l'interrupteur de sélection **50,** alors que la grille du transistor **58** est portée à la masse de manière à rendre sa résistance négligeable.

Pour un bolomètre de compensation **54** particulier, seul le courant traversant celui-ci est donc intégré par le circuit de mesure **40** associé. A la fin de la lecture de ce bolomètre, la tension $V_{out}$ en sortie de l'amplificateur **44** s'exprime donc selon la relation :

$$V_{out} = VBUS - \frac{\Delta T_{int}}{C_{int}} \times \frac{V_{comp}}{R_{comp}} \qquad (10)$$

Avec sensiblement :

$$V_{comp} \cong VSK - VBUS \qquad (11)$$

On notera comme précédemment que pour la mise en oeuvre de l'étape de lecture **65,** l'écart entre les tensions *VSK* et *VBUS* pendant l'étape **65,** et/ou la durée d'intégration $\Delta T_{int}$, et/ou une capacité $C_{int}$ plus importante, peuvent être choisis pour éviter une saturation de l'amplificateur **44 .**

Une fois la lecture de la matrice **12** et de la ligne **20** terminée, une résistance de référence $R_{abs}$ est calculée, lors d'une étape suivante **66,** pour chaque bolomètre d'imagerie **14** et de compensation **54** par l'unité de traitement d'informations **26** à partir d'un modèle physique du comportement en température de sa résistance.

Plus particulièrement, en **66,** l'unité de traitement d'informations **26** calcule la résistance de référence selon les relations :

$$R_{abs}(i,j) = R_{ac}(i,j).exp\left(-\frac{E_A}{k.T_{ref}}\right) \qquad (3)$$

$$R_{comp-abs}(j) = R_{comp}(j).exp\left(-\frac{E_A}{k.T_{ref}}\right) \qquad (12)$$

$$R_{ac}(i,j) = \frac{VBUS - VDET}{(V_{out}(i,j) - VBUS)} \times \frac{\Delta T_{int}}{C_{int}} \qquad (4)$$

$$R_{comp}(j) = \frac{VSK - VBUS}{(VBUS - V_{out}(j))} \times \frac{\Delta T_{int}}{C_{int}} \qquad (13)$$

où :

- exp est la fonction exponentielle,
- $E_A$ est une énergie prédéterminée d'activation du bolomètre,
- $k$ est la constance de Bolzmann,
- et $T_{ref}$ est la température du substrat mesurée lors de l'étape **60.**

Une fois l'étape d'initialisation **60** terminée, il est ainsi obtenu une table bidimensionnelle $R_{abs}$ de résistances de référence pour les bolomètres d'imagerie de la matrice **12** et de compensation de la ligne **20.** Cette table est alors mémorisée dans la mémoire de masse **32** de l'unité de traitement d'informations **26.**

Une fois le détecteur sorti d'usine et mis en service par un utilisateur, le procédé se poursuit pour la correction en temps réel des offsets de la matrice d'imagerie **12.**

Lors d'une mise sous tension du système, la table de résistances de référence est chargée, en **68,** dans la mémoire vive **30** de l'unité de traitement d'informations **26.** Toujours en **68,** deux tables bidimensionnelles de dimensions correspondant à celles de la matrice d'imagerie **12,** à savoir une table $R_{est}$ de résistances estimées et une table *NC* de niveaux de sortie, sont initialisées à zéro et mémorisées dans la mémoire vive **30.**

Dans une étape **70** suivante, la matrice **12** est exposée à une scène à observer. Ensuite, ou parallèlement à l'étape **70,** une mesure de la température du substrat est réalisée en **72** à l'aide de la sonde **22** et la valeur de température est mémorisées en tant que paramètre $T_{mes}$.

Le procédé se poursuit alors par une étape **74** de lecture classique (avec compensation de mode commun) des bolomètres d'imagerie **14** de la matrice **12,** comme cela a été décrit précédemment. Les différentes tensions (ou niveaux de sortie) $N_{brut}$ mesurées associées à ces bolomètres sont numérisées et mémorisées dans la mémoire vive **30.**

Un test est alors mis en oeuvre en **76** par l'unité **26** pour déterminer si la valeur absolue de la différence entre les valeurs $T_{ref}$ et $T_{mes}$ est supérieure à une valeur de seuil prédéterminée, par exemple égale à 0,2 degré Kelvin.

Si le résultat de ce test est positif, une résistance estimée $R_{est}(i,j)$ est calculée en **78** pour chaque bolomètre de la matrice **12** et de la ligne de compensation **20** par l'unité **26.** Cette résistance estimée du bolomètre est calculée en fonction de la résistance de référence $R_{abs}(i,j)$ et $R_{comp-abs}(j)$ correspondante de la table $R_{abs}$, selon les relations :

$$R_{est}(i,j) = R_{abs}(i,j).\exp\left(\frac{E_A}{k.T_{mes}}\right) \quad (5)$$

$$R_{comp-est}(j) = R_{comp-abs}(j).\exp\left(\frac{E_A}{k.T_{mes}}\right) \quad (14)$$

La valeur $R_{est}(i,j)$ ou $R_{comp-est}(j)$ remplace alors la valeur correspondante de la table $R_{est}$.

Une fois l'étape **78** terminée, une résistance estimée a donc été calculée pour chaque bolomètre de la matrice d'imagerie **12** et de la ligne de circuits de compensation **20** et mémorisée dans la table $R_{est}$.

Le procédé se poursuit alors par une étape **80** de calcul, pour chaque bolomètre d'imagerie de la table **12**, d'un niveau de sortie devant la scène uniforme $NC(i,j)$ par l'unité **26** selon les relations :

$$NC(i,j) = VBUS - \frac{\Delta T_{int}}{C_{int}}\left(I_{comp}(j) - I_{ac}(i,j)\right) \quad (15)$$

L'homme du métier sait exprimer $I_{comp}$ lorsque le MOS **58** est en régime saturé, à partir des paramètres technologiques et de la configuration du circuit, selon la relation :

$$I_{comp}(j) = \frac{-\left(1 + 2.R_{comp-est}(j).A_p\left(VSK - GSK - V_{thp}\right)\right) - \sqrt{1 + 4.R_{comp-est}(j).A_p\left(VSK - GSK - V_{thp}\right)}}{-2.A_p.R_{comp-est}^2(j)}$$

$$(16)$$

D'autre part $I_{ac}$ s'exprime, lorsque le MOS **52** est en régime saturé, par la relation :

$$I_{ac}(i,j) = \frac{-\left(1 + 2.R_{est}(i,j).A_n\left(GFID - V_{thn}\right)\right) - \sqrt{1 + 4.R_{est}(i,j).A_n\left(GFID - V_{thn}\right)}}{-2.A_n.R_{est}^2(i,j)} \quad (8)$$

où

- $Ap$ et $An$ sont des facteurs technologiques connus des MOS **58** et **52** respectivement ;
- $V_{thp}$ et $V_{thn}$ sont les tensions de seuil connues des MOS **58** et **52** respectivement ; et
- $VFID$ et $GSK$ étant les tensions appliquées sur les grilles des transistors **52** et **58** respectivement, connues également.

Les niveaux continus $NC(i,j)$ nouvellement calculés remplacent alors les valeurs de la table $NC$ correspondant aux bolomètres d'imagerie. Une fois l'étape **80** terminée, un niveau de scène uniforme, dit continu, a donc été calculé pour chaque bolomètre de la matrice d'imagerie **12** et mémorisé dans la table $NC$.

L'étape **80** est suivie d'une étape **82** de correction par l'unité **26** de la tension de sortie numérisée $N_{brut}(i,j)$ de chaque bolomètre d'imagerie selon la relation :

$$N_{corr}(i,j) = N_{brut}(i,j) - NC(i,j) + \overline{NC} \quad (9)$$

où $N_{corr}(i,j)$ est la tension de sortie numérisée corrigée et $\overline{NC}$ est la valeur moyenne des tensions de sortie devant une scène uniforme calculées lors de l'étape **80.**

Si le test mis en oeuvre lors de l'étape **76** est négatif, c'est-à-dire si la température du substrat n'a pas varié de manière significative entre deux cycles de lecture de la matrice d'imagerie **12,** l'étape **76** boucle sur l'étape de correction **82.** La correction de niveau continu est alors réalisée sur la base d'une matrice *NC* de niveaux continus calculée lors d'un cycle précédent.

L'étape **82** se poursuit alors par l'affichage, ou plus généralement l'exploitation, en **84,** de l'image corrigée de la scène capturée par la matrice **12,** puis en **86** du réglage de la valeur de température $T_{ref}$ à la valeur $T_{mes}$. L'étape **86** boucle alors sur l'étape **70** d'exposition pour l'accomplissement d'un nouveau cycle de lecture.

Comme il est possible de le constater, le système de détection selon l'invention utilise les notions suivantes.

Pour la correction des niveaux continus ou l'offset des bolomètres d'imagerie, un modèle physique de ceux-ci selon la relation (5) est utilisé. Ce modèle ne nécessite qu'une table de résistance de référence, et éventuellement en complément une table d'énergie d'activation (qu'il est très facile d'acquérir à partir de l'enregistrement initial des matrices NC à deux températures de plan focal suffisamment différentes, en conditions spatialement isothermes), pour connaître le comportement de la matrice d'imagerie sur tout le domaine de fonctionnement en températures de plan focal de celle-ci.

Par ailleurs, à partir d'un modèle physique de la formation du signal à partir du bolomètre d'imagerie, il est possible de prédire l'offset du bolomètre en simulant une illumination de la matrice d'imagerie par une scène uniforme. En effet, dans le cas d'une telle illumination, usuellement réalisée au moyen d'un obturateur mécanique, les températures de chaque élément de la matrice **12,** de la ligne de compensation **20,** du substrat et de la scène sont sensiblement égales.

Ainsi, à chaque cycle de lecture de la matrice, l'application d'un modèle physique du signal formé à partir d'un bolomètre d'imagerie, tel que celui de la relation (6) détaillée par les relations (7) et (8), et associé à la relation (5) particulière aux bolomètres (premier mode de réalisation), ou bien tel que celui de la relation (15) détaillée par les relations (8) et (16), et associé aux relations (5) et (14) (deuxième mode de réalisation), permet de simuler le comportement du niveau continu en sortie consécutif à une illumination par une scène uniforme de température égale à celle mesurée du substrat.

A partir de la relation (5) ou des relations (5) et (14), qui modélise particulièrement le comportement des résistances bolométriques, le modèle de formation du signal peut être affiné pour prendre en compte le phénomène bien connu d'auto-échauffement lié au courant de polarisation des bolomètres **14** lors de la lecture, voire même l'auto-échauffement résiduel des bolomètres de compensation **54.**

Un tel comportement simulé est représenté par les tables $R_{est}$ et *NC.* Les niveaux continus de signal correspondants $NC(i,j)$ en sortie des circuits de lecture **40** s'ils étaient placés devant une scène uniforme à la température du plan focal sont donnés par la relation (6) (premier mode de réalisation) ou (14) (deuxième mode de réalisation).

Le niveau de sortie corrigé devant une scène quelconque $N_{corr}(i,j)$ d'un bolomètre selon la relation (9) correspond donc bien à une tension de sortie de celui-ci, dans laquelle un offset $\overline{A_{brut}}-NC(i,j)$ par rapport à une tension de sortie moyenne $\overline{N_{brut}}$ de la matrice est annulé.

Bien entendu d'autres modes de réalisation sont possibles.

Ainsi pour affiner encore la précision de la compensation des offsets apparaissant dans les signaux de sortie de la matrice **12,** il peut être également avantageux de modéliser les dispersions intervenant dans la tension *VBUS* délivrée aux amplificateurs **44,** ou encore la dispersion des capacités $C_{int}$ de ceux-ci.

Dans les modes de réalisation venant d'être décrits, l'énergie d'activation $E_A$, par exemple fournie par le constructeur des bolomètres d'imagerie, est supposée identique pour tous les bolomètres d'imagerie. Ceci se justifie notamment dans le cas où le matériau bolométrique utilisé pour les bolomètres d'imagerie est du silicium amorphe. On observe en effet dans un tel cas que la dispersion parmi les énergies d'activation des bolomètres est parfaitement négligeable et qu'il n'est donc pas besoin d'en tenir compte.

Toutefois, dans des applications spécifiques demandant une précision accrue ou bien dans le cas d'utilisation d'un matériau bolométrique présentant une dispersion de l'énergie d'activation non négligeable d'un bolomètre à l'autre, une énergie d'activation est déterminée lors de l'étape d'initialisation **60** pour chaque bolomètre d'imagerie, voire aussi de chaque bolomètre de compensation, puisque le protocole d'acquisition individuelle évoqué précédemment le permet de la même manière. Ces énergies sont alors mémorisées dans la mémoire de masse **32** sous forme d'une table de dimensions correspondant à celles de la matrice d'imagerie (plus la ligne 20 de compensation) et est utilisée lors de la correction d'offset.

Par exemple, l'énergie d'activation $E_A(i,j)$ d'un bolomètre d'imagerie est déterminée lors de l'étape **60** d'initialisation en mettant en oeuvre deux fois les étapes **62** et **64** avec des températures de plan focal différentes, mais devant une scène uniforme et de température identique.

L'unité de traitement d'informations **26** calcule alors l'énergie d'activation du bolomètre 14 selon les relations :

$$E_A(i,j) = k \cdot \frac{(T_{ref2} \cdot T_{ref1})}{(T_{ref2} - T_{ref1})} \cdot ln\left(\frac{R_1(i,j)}{R_2(i,j)}\right) \quad (10)$$

où $T_{ref1}$ et $T_{ref2}$ sont les deux températures de plan focal prédéterminées, et $R1(i,j)$ et $R2(i,j)$ sont les résistances mesurées du bolomètre (i,j) pour ces deux températures respectivement. Une application de même forme donne accès aux énergies d'activation des bolomètres de compensation de mode commun, si nécessaire.

Il a été décrit un dispositif dans lequel une mesure de température est effectuée à l'aide d'une sonde unique. En variante, plusieurs sondes de température sont implantées dans le substrat du détecteur, et une table de température, notée $T_{mes}(i,j)$ est établie, à partir des signaux fournis par la pluralité de sondes de température.

La relation (5) est alors remplacée par la relation :

$$R_{est}(i,j) = R_{abs}(i,j) \cdot \exp\left(\frac{E_A}{k.T_{mes}(i,j)}\right) \quad (5bis)$$

On notera qu'à moins d'installer une sonde de température à proximité de chaque bolomètre, ce qui est une possibilité directe pour obtenir la table $T_{mes}(i,j)$, on obtient un résultat très acceptable au moyen d'un nombre réduit de sondes, disposées par exemple sur le pourtour de la matrice. La table $T_{mes}(i,j)$ est ensuite établie par exemple à l'aide d'un modèle thermique spatial qui approxime la distribution de température plan focal au voisinage immédiat de chaque bolomètre, en fonction de l'échantillonnage spatial fourni par la pluralité limitée de sondes de température.

Dans un tel cas, la correction de l'offset d'un bolomètre d'imagerie tient compte de la dispersion spatiale de température plan focal, y compris au voisinage des bolomètres de compensation, dispersions dont l'effet est éliminé par la correction numérique établie à l'aide de la table $T_{mes}(i,j)$. La précision de la correction est donc accrue.

On remarquera à cet égard que les bolomètres d'imagerie peuvent donc être considérés individuellement pour la correction de leur offset dans la mesure où la relation (9) reste inchangée pour les raisons évoquées précédemment pour la valeur $\overline{N_{brut}}$

Il a été décrit un dispositif de détection dans lequel l'unité de traitement d'informations **26** ainsi que la ou les tables de paramètres utilisées pour le modèle physique des bolomètres d'imagerie sont externes à la caméra par exemple infrarouge.

En variante, l'unité de traitement d'informations **26** est intégrée dans un boîtier de la caméra. Dans cette variante, la mémoire de masse est remplacée par une mémoire morte pour le stockage des tables de paramètres. L'unité de traitement d'informations **26** est alors par exemple réalisée sous la forme d'une carte électronique.

Dans une autre variante, les tables de paramètres sont enregistrées dans une mémoire morte ou de type flash, directement formée dans le substrat dans lequel est défini par ailleurs le circuit de lecture.

Dans une autre variante dans laquelle l'unité **26** est intégrée à la caméra, le circuit de conversion **24** ainsi que l'unité de traitement d'informations **26** sont réalisés dans le même substrat que celui qui porte par ailleurs le circuit de lecture.

Bien entendu d'autres modèles physiques que celui de la relation (5) ou des relations (5) et (14) peuvent être utilisés en fonction du degré de précision souhaité et de la puissance de calcul de l'unité de traitement d'informations **26,** bien que celui de la relation (5) soit privilégié pour sa précision, sa simplicité, et sa pertinence dans le cas particulier de la mise en oeuvre de silicium amorphe. De même, d'autres modélisations physiques de la formation du signal, exemplifiés ici par les éléments **40** et **42,** décrits à travers les relations (6) et les sous-relations de courants (7) et (8) (premier mode de réalisation) ou à travers les relations (15) et les sous-relations (8) et (16) (deuxième mode de réalisation) peuvent être utilisés en fonction de la configuration particulière et détails de la circuiterie de formation du signal.

Le dispositif venant d'être décrit présente donc les avantages suivants :

- l'utilisation d'un modèle physique permet une correction plus précise que celle mise en oeuvre à partir d'une interpolation de tables multiples. En effet, une interpolation, qui ne recouvre aucune réalité physique, reste moins précise dans la modélisation du comportement des bolomètres qu'un modèle physique de ceux-ci, qui reflète avec un degré élevé de précision la réalité des phénomènes ;
- l'utilisation d'un modèle physique permet de prendre en compte avec précision des températures de scène en dehors de la gamme de températures des tables à interpoler, c'est-à-dire permet d'extrapoler ;
- l'utilisation d'un modèle physique ne nécessite qu'un nombre limité de tables, voire ne nécessite qu'une table unique dans le cas du modèle de la relation (5). Ainsi, des économies de mémoires sont réalisés, ce qui est avantageux dans le cas où les tables sont mémorisées dans des mémoires mortes ou de types flash ; et

■ la correction d'offset selon l'invention ne nécessite pas d'élément mécanique tel qu'un obturateur par exemple. Toutefois, la correction selon l'invention simule l'utilisation d'un obturateur qui est usuellement le moyen le plus efficace d'obtenir une scène uniforme et donc le moyen le plus précis pour déterminer les offsets des bolomètres ;

■ le volume de calculs à traiter pour la mise en oeuvre de l'invention est suffisamment réduit pour en permettre une implémentation en temps réel sur un processeur actuel. L'intérêt de l'invention est donc de présenter un compromis avantageux entre la précision des corrections et la compacité de l'implémentation algorithmique.

La présente invention trouve application dans le domaine des capteurs d'image ou thermométriques à détection bolométrique, quelle que soit la bande de fréquences de détection ou du type de matériau bolométrique utilisé pour fabriquer les bolomètres d'imagerie et de compensation, comme par exemple du silicium amorphe (a-Si) ou matériaux apparentés alliés avec du carbone ou du germanium, et dopés de diverses façons, les oxydes de vanadium (VOx), un métal (par exemple du titane).

## Revendications

1. Dispositif de détection d'un rayonnement infrarouge comportant :

- un substrat ;
- une matrice (12) d'au moins une ligne d'éléments de détection dudit rayonnement comportant chacun un bolomètre résistif d'imagerie (14), ladite matrice étant formée au dessus du substrat ;
- un circuit (18) de lecture configuré pour appliquer un stimuli électrique à chacun des bolomètres de la matrice pour former un signal électrique analogique constituant une image du rayonnement infrarouge détecté par la matrice,
- une sonde (22) configurée pour mesurer la température en au moins un point du substrat ;
- un convertisseur analogique-numérique configuré pour convertir les signaux électriques analogiques formés par le circuit de lecture et la sonde en valeurs numériques ;
- et une unité de traitement d'informations (26) configurée pour :

   o mémoriser des valeurs numériques $NC(i, j)$ correspondant à l'exposition de la matrice à une scène uniforme à la température mesurée du substrat ;
   o corriger la valeur numérique $N_{brut}(i,j)$ formée à partir de chaque bolomètre d'imagerie (14) selon la relation :

$$N_{corr}(i, j) = N_{brut}(i, j) - NC(i, j) + \overline{NC}$$

où $N_{corr}(i,j)$ est le signal de sortie corrigé et $\overline{NC}$ est la valeur moyenne des valeurs numériques $NC(i, j)$ mémorisées;

***caractérisé* en ce que** l'unité de traitement d'informations (26) est en outre configurée pour :

- mémoriser des valeurs numériques prédéterminées de résistances électriques de référence $R_{abs}(i,j)$ des bolomètres d'imagerie correspondant à l'exposition de la matrice à une scène uniforme à une température de référence $T_{ref}$ du substrat ;
- mémoriser un modèle physique prédéterminé des signaux électriques formés par le circuit de lecture en fonction de la résistance électrique des bolomètres d'imagerie ;
- calculer les valeurs numériques $NC(i, j)$ en :

   o calculant des valeurs numériques $R_{est}(i,j)$ des résistances des bolomètres d'imagerie à la température mesurée du substrat selon la relation :

$$R_{est}(i, j) = R_{abs}(i, j).C(T_{mes})$$

où $C(T_{mes})$ est un paramètre dépendant de la température mesurée $T_{mes}$ du substrat ;
   o calculant les valeurs numériques $NC(i, j)$ en fonction des valeurs numériques $R_{est}(i,j)$ des résistances des bolomètres d'imagerie et du modèle physique des signaux formées par le circuit de lecture.

2. Dispositif de détection selon la revendication 1, *caractérisé* **en ce que** ce qu'il comprend une pluralité de sondes de mesure de température aptes à mesurer la température du substrat en une pluralité de points de celui-ci, et **en ce que** l'unité de traitement d'informations est configurée pour modéliser la distribution spatiale de la température du substrat en fonction de la température mesurée en la pluralité de points du substrat, et pour à corriger les signaux formés à partir des bolomètres d'imagerie (14) en fonction de la température modélisée du substrat au voisinage de ceux-ci.

3. Dispositif de détection d'un rayonnement infrarouge selon la revendication 1 ou 2, *caractérisé* **en ce que** le paramètre $C(T_{mes})$ est calculé selon la relation :

$$C(T_{mes}) = \exp\left(\frac{E_A}{k.T_{mes}}\right)$$

où $E_A$ est une énergie d'activation prédéterminée des bolomètres d'imagerie, $k$ est la constante de Bolzmann, et $T_{mes}$ est la température mesurée du substrat exprimée en degrés Kelvin.

4. Dispositif de détection d'un rayonnement infrarouge selon l'une quelconque des revendications précédentes, *caractérisé* **en ce qu'**il comporte une structure de compensation de mode commun (20) comprenant un bolomètre de compensation (54) associé à chaque colonne de la matrice (12), le circuit de lecture (18) étant apte à former le signal à partir d'une différence entre un courant circulant dans le bolomètre d'imagerie (14) et un courant circulant dans le bolomètre de compensation (54) associé à celui-ci, et **en ce que** l'unité de traitement d'informations est configurée pour estimer une résistance dudit bolomètre de compensation (54), pour corriger le signal.

5. Dispositif de détection d'un rayonnement infrarouge selon la revendication 7, *caractérisé* **en ce que** l'unité de traitement d'informations (26) est configurée pour estimer la résistance du bolomètre de compensation (54) selon la relation :

$$R_{comp-est}(j) = R_{comp-abs}(j).C(T_{mes})$$

où $R_{comp-est}(j)$ est la résistance du bolomètre de compensation estimée, $R_{comp-abs}(j)$ est une résistance de référence prédéterminée du bolomètre de compensation, et $C(T_{mes})$ est un paramètre dépendant de la température mesurée $T_{mes}$ du substrat.

6. Dispositif de détection d'un rayonnement infrarouge selon la revendication 5, *caractérisé* **en ce que** le paramètre $C(T_{mes})$ est calculé selon la relation :

$$C(T_{mes}) = \exp\left(\frac{E_A}{k.T_{mes}}\right)$$

où $E_A$ est une énergie d'activation prédéterminée du bolomètre d'imagerie, $k$ est la constante de Bolzmann, et $T_{mes}$ est la température mesurée exprimée en degrés Kelvin.

7. Dispositif de détection d'un rayonnement infrarouge selon l'une quelconque des revendications 4 à 6, *caractérisé* **en ce que** l'unité de traitement d'informations (26) est configurée pour estimer un niveau continu du signal formé à partir du bolomètre d'imagerie (14), correspondant à l'exposition de la matrice (12) à une scène uniforme de température sensiblement égale à la température mesurée, selon la relation :

$$NC(i,j) = \alpha - \beta \times \left(I_{comp}(j) - I_{ac}(i,j)\right)$$

où $\alpha$ et $\beta$ sont des paramètres prédéterminés dépendant du circuit de lecture (18), $I_{comp}(j)$ est le courant circulant dans le bolomètre de compensation (54) calculé à partir de la résistance estimée de celui-ci, et $I_{ac}(i,j)$ est le courant circulant dans le bolomètre d'imagerie (14) calculé à partir de la résistance estimée de celui-ci.

8. Dispositif de détection d'un rayonnement infrarouge selon l'une quelconque des revendications précédentes, *caractérisé* en ce l'unité de traitement d'informations (26) est réalisée au moins partiellement dans ledit substrat.

9. Dispositif de détection d'un rayonnement infrarouge selon l'une des revendications précédentes, *caractérisé en ce que* les résistances de référence des bolomètres de la matrice sont tabulées dans une mémoire permanente intégrée au substrat.

10. Dispositif de détection d'un rayonnement infrarouge selon l'une quelconques des revendications précédentes, *caractérisé en ce que* l'unité de traitement d'informations (26) est réalisée sous la forme d'un circuit électronique intégré au substrat.

**Patentansprüche**

1. Vorrichtung zur Erkennung einer Infrarotstrahlung, umfassend:

- ein Substrat;
- eine Matrix (12), mit mindestens einer Reihe von Elementen zur Erkennung dieser Strahlung, von denen jede einen Bildgebungs- Widerstandsbolometer (14) enthält, wobei diese Matrix über dem Substrat gebildet wird;
- eine Leseschaltung (18), konfiguriert um einen elektrischen Reiz auf jeden der Bolometer der Matrix auszuüben, um ein analoges elektrisches Signal zu bilden, das ein Bild der von der Matrix entdeckten Infrarot- Strahlung darstellt.
- Eine Sonde (22), konfiguriert zur Messung der Temperatur an mindestens einem Punkt des Substrats;
- ein Analog- Digital- Wandler, konfiguriert um die analogen elektrischen Signale, die die Leseschaltung und die Sonde bilden, in digitale Werte umzuwandeln;
- und eine Informationsverarbeitungseinheit (26) konfiguriert zur:

o Speicherung der digitalen Werte NC(i, j) entsprechend der Exposition der Matrix gegenüber einer gleichmäßigen Szene, bei der gemessenen Substrattemperatur;
o Korrektur des digitalen Wertes $N_{brut}$ (i, j), gebildet ausgehend von jedem Bildgebungs- Bolometer (14) nach der Gleichung:

$$N_{corr}(i, j) = N_{brut}(i, j) - NC(i, j) + \overline{NC}$$

worin $N_{corr}(i,j)$ das korrigierte Ausgangssignal ist und $\overline{NC}$ der Durchschnittswert der gespeicherten digitalen Werte $NC(i,j);$

*dadurch gekennzeichet,* dass die Informationsverarbeitungseinheit (26) außerdem konfiguriert ist zur:
- Speicherung der vorher festgelegten digitalen Werte der elektrischen Referenzwiderstände $R_{abs}$ (i, j) der Bildgebungs- Bolometer, entsprechend der Exposition der Matrix gegenüber einer gleichmäßigen Szene, bei einer Referenztemperatur $T_{ref}$ des Substrats;
- Speicherung eines vorher festgelegten physischen Modells der elektrischen Signale, die von der Leseschaltung in Abhängigkeit vom elektrischen Widerstand des Bildgebungs- Bolometer gebildet werden;
- Berechnung der digitalen Werte $NC (i,j)$ durch:

o Berechnung der digitalen Werte $R_{est} (i,j)$ der Bildgebungs- Bolometer bei der gemessenen Temperatur des Substrats, nach der Gleichung:

$$R_{est}(i, j) = R_{abs}(i, j).C(T_{mes})$$

in der $C(T_{mes})$ ein Parameter ist, der von der gemessenen Temperatur $T_{mes}$ des Substrats abhängt;

o Berechnung der digitalen Werte *NC (i,j)* in Abhängigkeit von den digitalen Werte $R_{est}(i,j)$ der Widerstände der Bildgebungs- Bolometer und des physischen Modells der Signale, die von der Leseschaltung gebildet werden.

2. Vorrichtung zur Erkennung einer Infrarotstrahlung gemäß Anspruch 1, *dadurch gekennzeichnet,* **dass** sie mehrere Temperaturmesssonden umfasst, die in der Lage sind, die Temperatur des Substrats an verschiedenen Punkten darin zu messen und dass die Informationsverarbeitungseinheit konfiguriert ist, um ein Modell der räumlichen Verteilung der Substrat- Temperatur in Abhängigkeit von der gemessenen Temperatur an den verschiedenen Substratpunkten zur erstellen und zur Korrektur der Signale, die ausgehend von den Bildgebungs- Bolometern (14) gebildet werden, in Abhängigkeit von der im Modell dargestellten Temperatur des Substrats in deren Umgebung zu korrigieren.

3. Vorrichtung zur Erkennung einer Infrarot- Strahlung gemäß Anspruch 1 oder 2, *dadurch gekennzeichnet,* **dass** der Parameter $C(T_{mes})$ berechnet wird nach der Gleichung:

$$C(T_{mes}) = \exp\left(\frac{E_A}{k.T_{mes}}\right)$$

worin $E_A$ eine vorher festgelegte Aktivierungsenergie der Bildgebungs- Bolometer ist, *k* ist die Bolzmann - Konstante und $T_{mes}$ die gemessene Temperatur des Substrat, ausgedrückt in Grad Kelvin.

4. Vorrichtung zur Erkennung einer Infrarot- Strahlung gemäß irgendeinem der vorhergehenden Ansprüche, *dadurch gekennzeichnet,* **dass** es eine Gleichtakt-Ausgleichsstruktur (20) enthält, mit einem Ausgleichs- Bolometer (54), verknüpft mit jeder Spalte der Matrix (12), die Leseschaltung (18) ist in der Lage, das Signal ausgehend von einer Differenz zwischen einem Strom, der im Bildgebungs-Bolometer (14) fließt und einem Strom der im damit verknüpften Ausgleichs-Bolometer (54) fließt, zu formen, und dadurch dass die Informationsverarbeitungseinheit konfiguriert ist, um einen Widerstand dieses Informationsverarbeitungseinheit konfiguriert ist, um einen Widerstand dieses Ausgleichs- Bolometers (54) zu schätzen, um das Signal zu korrigieren.

5. Vorrichtung zur Erkennung einer Infrarot- Strahlung gemäß Anspruch 7, **dadurch gekennzeichnet, dass** die Informationsverarbeitungseinheit (26) konfiguriert ist, um den Widerstand des Ausgleichs- Bolometers (54) zu schätzen, nach der Gleichung:

$$R_{comp\text{-}est}(j) = R_{comp\text{-}abs}(j).C(T_{mes})$$

worin $R_{comp\text{-}est}(j)$ der geschätzte Widerstand des Ausgleichs- Bolometers ist, $R_{comp\text{-}abs}(j)$ ist ein vorher festgelegter Referenzwiderstand des Ausgleichs- Bolometers und $C(T_{mes})$ *(J)* ist ein Parameter, der von der gemessenen Temperatur $T_{mes}$ des Substrats abhängt.

6. Vorrichtung zur Erkennung einer Infrarot- Strahlung gemäß Anspruch 5, **dadurch gekennzeichnet, dass** der Parameter $C(T_{mes})$ berechnet wird nach der Gleichung:

$$C(T_{mes}) = \exp\left(\frac{E_A}{k.T_{mes}}\right)$$

worin $E_A$ eine vorher festgelegte Aktivierungsenergie der Bildgebungs- Bolometer ist, *k* die Bolzmann - Konstante, und $T_{mes}$ die gemessene Temperatur des Substrats, ausgedrückt in Grad Kelvin ist.

7. Vorrichtung zur Erkennung einer Infrarot- Strahlung gemäß irgendeinem der Ansprüche 4 bis 6, *dadurch gekennzeichnet,* **dass** die Informationsverarbeitungseinheit (26) konfiguriert ist, um einen kontinuierlichen Pegel des Signals zu schätzen, das ausgehend vom Bildgebungs- Bolometer (14) geformt wird, entsprechend der Exposition der Matrix (12) gegenüber einer gleichmäßigen Temperatur- Szene, die deutlich gleich der gemessenen Temperatur ist, nach der Gleichung:

$$NC(i,j) = a - \beta \; x \; (I_{comp} \; (j) - I_{ac} \; (i, j))$$

worin $\alpha$ und $\beta$ vorher festgelegte Parameter sind, abhängig von der Leseschaltung (18), $I_{comp}(J)$ ist der Strom, der im Ausgleichs- Bolometer (54) fließt, berechnet ausgehend von dessen geschätztem Widerstand, und $I_{ac}$ $(i,j)$ ist der Strom der im Bildgebungs- Bolometer (14) fließt, berechnet ausgehend von dessen geschätztem Widerstand.

8.  Vorrichtung zur Erkennung einer Infrarot- Strahlung gemäß irgendeinem der vorhergehenden Ansprüche, **dadurch gekennzeichnet, dass** die Informationsverarbeitungseinheit (26) zumindest teilweise im genannten Substrat ausgeführt ist.

9.  Vorrichtung zur Erkennung einer Infrarot- Strahlung gemäß irgendeinem der vorhergehenden Ansprüche, **dadurch gekennzeichnet, dass** die Referenzwiderstände der Matrix- Bolometer tabelliert sind, in einem permanenten, im Substrat integrierten Speicher.

10. Vorrichtung zur Erkennung einer Infrarot- Strahlung gemäß irgendeinem der vorhergehenden Ansprüche, **dadurch gekennzeichnet, dass** die Informationsverarbeitungseinheit (26) in Form einer im Substrat integrierten elektronischen Schaltung ausgeführt ist.

## Claims

1.  A device for detecting infrared radiation that comprises:

    - a substrate;
    - a matrix (12) of at least one line of elements for detecting said radiation each comprising a resistive imaging bolometer (14), said matrix being formed above the substrate;
    - a readout circuit (18) configured to apply electrical stimuli to each of the bolometers of the matrix to form an analogue electrical signal constituting an image of infrared radiation detected by the matrix ;
    - one probe (22) configured to measure the temperature in at least one point of the substrate;
    - an analogic-digital converter configured to convert analogue electrical signals delivered by the readout circuit and the probe into digital values ;
    - and a data processing unit (26) configured

       - to store digital values $NC(i,j)$ corresponding to exposition of the matrix by a uniform scene at the measured temperature of the substrate,
       - to correct the digital value $N_{brut}(i,j)$ formed from each imaging bolometer (14) according to the relation:

    $$N_{corr}(i, j) = N_{brut}(i, j) - NC(i, j) + \overline{NC}$$

    where $N_{corr}(i,j)$ is the corrected output signal and $\overline{NC}$ is the mean value of the stored digital values $N_{brut}(i,j)$ ;

    **characterized** in that the data processing unit (26) is further configured :

    - to store predetermined digital values of electrical reference resistance $R_{abs}(i,j)$ of the imaging bolometers corresponding to exposition of the matrix by a uniform scene at one reference temperature $T_{ref}$ of the substrate ;
    - to store a predetermined physical model of the electrical signals formed by the readout circuit as a function of the electrical resistance of the imaging bolometers ;
    - to calculate the digital values $NC(i,j)$ :

       - in calculating digital values $R_{est}(i,j)$ of the resistance of the imaging bolometer on the measured temperature $T_{mes}$ of the substrate according to the relation :

    $$R_{est}(i, j) = R_{abs}(i, j).C(T_{mes})$$

where $C(T_{mes})$ is a parameter dependent on the measured temperature $T_{mes}$ of the substrate ;
- in calculating the digital values $NC(i,j)$ as a function of the digital values $R_{est}(i,j)$ of the resistance of the imaging bolometers and of the physical model of the signals formed by the readout circuit.

2. The infrared radiation detection device as claimed in claim 1, ***characterized* in that** it comprises a plurality of temperature measurement probes capable of measuring the temperature of the substrate in a plurality of points thereof, and **in that** the data processing unit is configured to model the spatial distribution of the temperature of the substrate as a function of the temperature measured in the plurality of points of the substrate, for correcting the signals formed from the imaging bolometers (14) as a function of the modelled temperature of the substrate in the vicinity thereof

3. The infrared radiation detection device as claimed in claims 1 or 2, ***characterized* in that** the parameter $C(T_{mes})$ is calculated according to the relation:

$$C(T_{mes}) = \exp\left(\frac{E_A}{k.T_{mes}}\right)$$

where $E_A$ is a predetermined imaging bolometer activation energy, $k$ is the Bolzmann constant, and $T_{mes}$ is the measured temperature of the substrate expressed in degrees Kelvin.

4. The infrared radiation detection device as claimed in any one of the previous claims, ***characterized* in that** it comprises a common mode compensation structure (20) that includes a compensating bolometer (54) associated with each column of the matrix (12), the readout circuit (18) being capable of forming the signal from a difference between a current flowing in the imaging bolometer (14) and a current flowing in the compensating bolometer (54) associated therewith, and **in that** the data processing unit (26) is configured to estimate a resistance of said compensating bolometer (54), in order to correct the signal.

5. The infrared radiation detection device as claimed in claim 4, ***characterized* in that** the data processing unit (26) is configured to estimate the resistance of the compensating bolometer (54) according to the relation:

$$R_{comp-est}(j) = R_{comp-abs}(j).C(T_{mes})$$

where $R_{comp-est}(j)$ is the estimated resistance of the compensating bolometer, $R_{comp-abs}(i)$ is a predetermined reference resistance of the compensating bolometer, and $C(T_{mes})$ is a parameter dependent on the measured temperature $T_{mes}$ of the substrate.

6. The infrared radiation detection device as claimed in claim 5, ***characterized* in that** the parameter $C(T_{mes})$ is calculated according to the relation:

$$C(T_{mes}) = \exp\left(\frac{E_A}{k.T_{mes}}\right)$$

where $E_A$ is a predetermined imaging bolometer activation energy, $k$ is the Bolzmann constant, and $T_{mes}$ is the measured temperature expressed in degrees Kelvin.

7. The infrared radiation detection device as claimed in any one of claims 4 to 6, ***characterized* in that** the data processing unit (26) is configured to estimate a continuous level of the signal formed from the imaging bolometer (14), corresponding to the exposure of the matrix (12) to a uniform scene of temperature substantially equal to the measured temperature, according to the relation:

$$NC(i,j) = \alpha - \beta \times \left( I_{comp}(j) - I_{ac}(i,j) \right)$$

where $\alpha$ and $\beta$ are predetermined parameters dependent on the read circuit (18), $I_{comp}(j)$ is the current flowing in the compensating bolometer (54) calculated from the estimated resistance thereof, and $I_{ac}(i,j)$ is the current flowing in the imaging bolometer (14) calculated from the estimated resistance thereof

8. The infrared radiation detection device as claimed in any one of the previous claims, *characterized* **in that** the data processing unit (26) is implemented at least partially in said substrate.

9. The infrared radiation detection device as claimed in any one of the previous claims, *characterized* **in that** the reference resistances of the bolometers of the matrix are tabulated in a permanent memory built into the substrate.

10. The infrared radiation detection device as claimed in any one of the previous claims, *characterized* **in that** the data processing unit (26) is implemented in the form of an electronic circuit built into the substrate.

EP 2 307 864 B1

Fig. 1

Fig. 2

Fig. 3

**Fig. 4**

## RÉFÉRENCES CITÉES DANS LA DESCRIPTION

**Documents brevets cités dans la description**

- US 2002022938 A
- US 5811808 A
- US 2003160171 A
- US 2003146383 A

**Littérature non-brevet citée dans la description**

- **DE E. MOTTIN et al.** Uncooled amorphous silicon enhancement for 25$\mu$m pixel pitch achievement. *Infrared Technology and Application XXVIII, SPIE,* vol. 4820
- **E. MOTTIN et al.** Uncooled amorphous silicon enhancement for 25$\mu$m pixel pitch achievement. *Infrared Technology and Application XXVIII, SPIE,* vol. 4820
- **B. FIEQUE et al.** 320 x 240 uncooled microbolometer 2D array for radiometric and process control applications. *Optical System Design Conference, SPIE,* vol. 5251
- **C TROUILLEAU et al.** Low cost amorphous silicon based 160 x 120 uncooled microbolometer 2D array for high volume applications. *Optical System Design Conference, SPIE,* vol. 5251